# EUROPEAN PATENT APPLICATION

(11) **EP 4 756 231 A2**
(43) Date of publication of application: **10.06.2026**
(21) Application number: 26174817.2
(22) Date of filing: 31.08.2022
(51) Int. Cl.: F04C 29/04

(54) **AIR-COOLED DEVICE AND METHOD FOR CONTROLLING AN AIR-COOLED DEVICE**

(30) Priority: 04.10.2021 BE 202105774
(62) Divisional of application: 22776998.1
(71) Applicant: Atlas Copco Airpower, naamloze vennootschap, 2610 Wilrijk (BE)
(72) Inventor: MARTENS, Kristof Adrien Laura, 2610 Wilrijk (BE)
(74) Representative: Atlas Copco Airpower IP department

(57) **Abstract**

Method for controlling an air-cooled device (1) for compressing a gas, which device comprises at least one element (2) for compressing the gas, at least one air-cooled cooler (9, 12) for cooling a fluid in the device (1) and two or more fans (10, 13), at least one of the fans (10, 13) being an adjustable-speed fan (13) for generating a flow of cooling air for cooling the air-cooled cooler (9, 12), characterized in that, when the air-cooled cooler (9, 12) does not need to cool, the method consists of controlling the speed of the adjustable-speed fan (13) to a minimum required speed in order to avoid at least a backflow of cooling air traveling in a direction opposite to the flow.

## Description

The present invention relates to a method for controlling an air-cooled device for compressing a gas.

In this context, "device for compressing a gas" can mean a compressor device, a blower device and a vacuum pump device.

In particular, the invention is intended to control an adjustable-speed fan, with which the device is equipped.

In this case, "air-cooled device" means that the device comprises at least one air-cooled cooler for cooling a liquid, for example oil, injected into an element of the device and/or for cooling the gas compressed by the device.

It cannot be ruled out that the air-cooled device according to the invention further comprises another type of cooler.

The air-cooled cooler is provided with a fan that generates a flow of cooling air for cooling the air-cooled cooler.

The device is typically provided with a plurality of such fans that generate a flow of cooling air to cool one or more air-cooled coolers.

Said air-cooled coolers cool the injected liquid and/or the compressed gas.

In some cases, it is temporarily unnecessary to cool the injected liquid and/or the compressed gas.

The air coolers concerned should then not cool the injected liquid and/or the gas.

It is known that in the known devices for compressing gas, the fans concerned can then be switched off to ensure that less power is consumed by the fans.

Stopping the fans can cause a backflow of heated cooling air across the air-cooled coolers in case a plurality of coolers are connected to a common outlet for cooling air. This backflow of heated cooling air can then be mixed with fresh cooling air, as a result of which a mean cooling air temperature increases on a cold side of the air-cooled coolers where cooling is still required, which then results in an undesired decrease in cooling capacity.

For this reason, slats or louvers are often used to stop this undesired backflow.

This has the disadvantage of being associated with an additional cost and making the device bulkier.

In addition, this is paired with a pressure drop in the cooling air across the slats, as a result of which more power is needed in order to achieve the same volume flow of cooling air, even when the slats are fully opened.

The present invention has the objective of providing a solution for at least one of the aforementioned and/or other disadvantages.

The present invention relates to a method for controlling a device for compressing a gas, which device comprises at least one element for compressing the gas, at least one air-cooled cooler for cooling a fluid in the device and two or more fans, at least one of the fans being an adjustable-speed fan for generating a flow of cooling air for cooling the air-cooled cooler, characterized in that, when the air-cooled cooler does not need to cool, the method consists of controlling the speed of the adjustable-speed fan to a minimum required speed in order to avoid at least a backflow of cooling air traveling in a direction opposite to the flow.

One advantage is that the method according to the invention allows an energy consumption of the device to be optimized by optimizing an energy consumption of the adjustable-speed fan or fans.

By running the adjustable-speed fan at the minimum required speed at the times when this is possible, energy consumption can be minimized.

A further advantage is that a backflow of heated cooling air is avoided without an additional pressure drop occurring in the cooling air flow when the adjustable-speed fan does provide cooling air for cooling.

This is because the minimum required speed of the fan ensures that the adjustable-speed fan generates a minimum cooling air flow that ensures that backflow is not possible.

The times when the air-cooled cooler does not need to cool not only depend on which function said cooler has, i.e., whether said cooler cools the compressed gas or a liquid injected into the element, but also on an operating mode of the device.

Said cooler can be a cooler for the injected liquid, an intercooler for the compressed gas or an aftercooler for the compressed gas.

The speed of the adjustable-speed fan is preferably reduced to the minimum required speed if:
- it is not necessary to cool the compressed gas in case the air-cooled cooler is used to cool the gas compressed by the device; and/or
- a heat recovery system provides a necessary cooling of the fluid instead of the air-cooled cooler; and/or
- the element is stopped or running without a load.

In some cases, the compressed gas does not need to be cooled if a consumer of said compressed gas requires warm or hot gas for its application.

It is also possible for the device to be provided with a heat recovery system. If said system recovers enough heat, no additional cooling by the aforementioned air-cooled cooler is necessary. The heat recovery system can be used for a liquid circuit of the device and for the compressed gas.

In the case of devices having a plurality of elements connected in parallel, it is possible for one or more of the elements to be switched off or run without a load at certain times, for example when there is less demand for compressed gas, as a result of which no cooling is necessary for this element of the injected liquid and/or the compressed gas.

According to a preferred feature of the invention, the adjustable-speed fan is driven by a fan motor that is cooled by said fan, and the method consists of controlling the speed of the adjustable-speed fan to the minimum required speed if the air-cooled cooler does not need to cool in order to avoid the backflow of cooling air and in order to cool the aforementioned fan motor just enough to prevent the fan motor from overheating.

One advantage is that, in this manner, overheating of the fan motor is avoided and not only the backflow of heated cooling air.

The invention also relates to a device for compressing gas, which device comprises at least one element for compressing gas, at least one air-cooled cooler for cooling a fluid in the device and two or more fans for cooling the air-cooled cooler, at least one of the fans being an adjustable-speed fan for generating a flow of cooling air for cooling the air-cooled cooler, characterized in that the adjustable-speed fan is provided with a controller that is configured to carry out a method according to the invention.

The advantages of such a device are similar to those of the method.

With a view to better demonstrate the features of the invention, a number of preferred embodiments of an air-cooled device according to the invention and a method according to the invention for controlling an air-cooled device are described below, without any restrictive character, with reference to the accompanying drawings, in which:
Fig. 1 schematically shows an device according to the invention;
Fig. 2 shows a variant of Fig. 1;
Fig. 3 shows a further variant of Fig. 1.

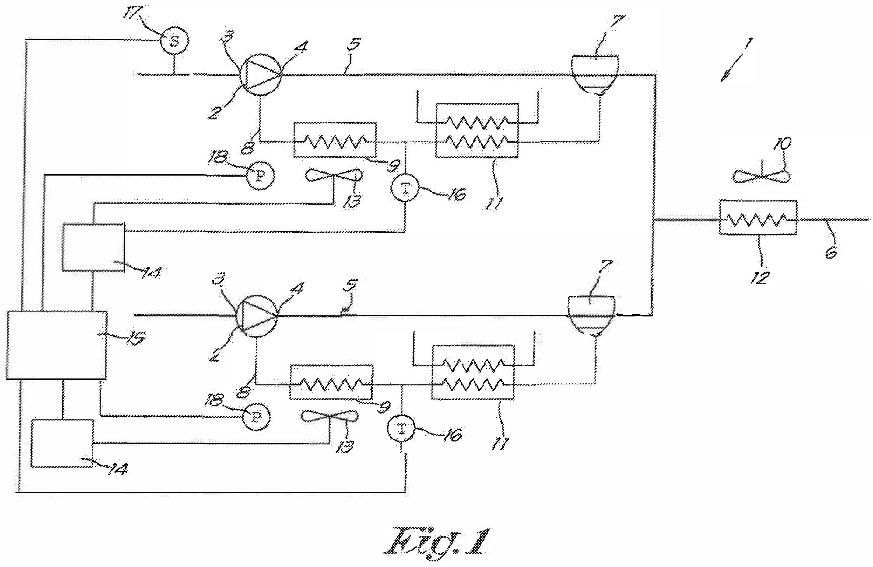

The device 1 according to the invention shown in Fig. 1 comprises two elements 2 for compressing gas connected in parallel.

Each element 2 has an inlet 3 and an outlet 4 with an outlet line 5 connected thereto, the two outlet lines 5 converging to form an outlet line 6 of the device 1.

The elements 2 can be screw compressor elements, but this is not necessary for the invention.

The elements 2 are in this case liquid-injected elements 2, but this is not necessary for the invention.

Furthermore, a liquid separator 7 is provided in the respective outlet line 5 downstream of each element 2 for separating the liquid injected into the element 2.

The separated oil is returned to and injected into the element 2 via a return line 8.

In both return lines 8, an air-cooled cooler 9 is provided with a fan 13.

In this case, said fans 13 have a variable speed. Within the scope of the invention, it can of course not be ruled out that the fans have no variable speed provided that another fan in the device has a variable speed.

In this case, a heat recovery system 11 is provided in each return line 8 downstream of the liquid separator 7 and upstream of the air-cooled coolers 9, which heat recovery system can recover heat generated by the element 2 from the liquid. Said heat is reused, for example, for heating applications or for heating domestic water.

Said heat recovery systems 11 are optional for the invention.

Downstream of both liquid separators 7, the outlet lines 5 of the elements 2 converge into the outlet line 6 of the device 1.

An air-cooled cooler 12 is arranged in said outlet line 6 of the device 1 with a fan 10 that is a fixed-speed fan 10.

Said cooler 12 is also referred to as an aftercooler.

All coolers 9, 12 are connected to a discharge (not shown in the figures) for cooling air that discharges the heated cooling air after it has passed through the coolers 9, 12.

The aforementioned adjustable-speed fans 13 are in this case each provided with a variable-speed fan motor 14 that is controlled by one controller 15.

The aforementioned controller 15 is configured to control the adjustable-speed fans 13 according to a method according to the invention.

Furthermore, the controller 15 is connected to temperature sensors 16 that, in this case, each measure a temperature of the liquid in the return line 8 upstream of the cooler 9. It cannot be ruled out that the temperature sensors 16 measure the temperature of the liquid downstream of the coolers 9.

The controller 15 is also connected to an inlet sensor 17 that measures environmental parameters of the gas to be compressed and to pressure sensors 18 that each measure a pressure of the cooling air flow generated by the adjustable-speed fan 13.

The aforementioned environmental parameters include, for example, but are not limited to an atmospheric pressure, ambient temperature and/or humidity of the gas in an environment of the device 1.

The operation of the device 1 is very simple and as follows.

The elements 2 compress gas in the known manner, liquid being injected into the element 2 in order to lubricate and cool the element 2.

The liquid is separated via the liquid separator 7 and passed through the heat recovery systems 11 via the return lines 8. The liquid is then cooled in the air-cooled coolers 9 before it is injected back into the elements 2.

The compressed gas then passes through the cooler 12 in the outlet line 6 of the device 1, where it undergoes cooling.

The controller 15 controls the fan motors 14 according to a method according to the invention.

When the heat recovery systems 11 are in operation, the coolers 9 do not need to cool because the liquid is already cooled when it passes through said coolers 9.

In such cases, the controller 15 controls the adjustable-speed fans 13 such that the speed of the adjustable-speed fans 13 is reduced to the minimum required speed to prevent a backflow of cooling air, i.e., to prevent heated cooling air in the discharge for cooling air coming from the other coolers 9 and/or the cooler 12 in the outlet line 6 of the device 1 flowing back to the coolers 9.

The aforementioned minimum required speed is in this case determined on the basis of the environmental parameters and the pressure of the cooling air flow generated by the fan 13.

If the fans 10, 13 have a common outlet for cooling air, the minimum required speed can also be determined on the basis of a pressure of the cooling air in said common outlet for cooling air.

The controller 15 determines said minimum required speed on the basis of the signals of the inlet sensor 17 and the pressure sensor 18.

It is also possible that only the environmental parameters or only the pressure of the air flow generated by the fan 13 or only the pressure of the cooling air in the common outlet for cooling air is taken into account.

If the controller 15 determines that the liquid is sufficiently cooled on the basis of the measurements from the temperature sensors 16, the controller 15 controls the fan motors 14 in such a way that the speed of the fans 13 drops to the aforementioned determined minimum required speed.

In all these cases, the fan motors 14 consume less energy.

The aforementioned minimum required speed as described above is preferably determined at regular intervals, the minimum required speed being adapted if the parameters on the basis of which the minimum required speed is determined change.

However, it is also possible for the minimum required speed to be a predetermined fixed value that is determined on the basis of a worst-case scenario of the operating mode of another fan 10 and/or the cooler 12 in the outlet line 6 of the device 1.

This means that the controller 15 controls the adjustable-speed fans 13 in the aforementioned cases in which no cooling is necessary in such a way that the speed of the adjustable-speed fan 13 is equal to said fixed minimum required value.

In this case, the adjustable-speed fan motors 14 also consume less energy.

It is important to note that the adjustable-speed fans 13 are brought back to their minimum possible speed in these cases, such that a reduction in energy consumption is also maximized.

It should be clear that the device 1 of Fig. 1 is only one possible embodiment.

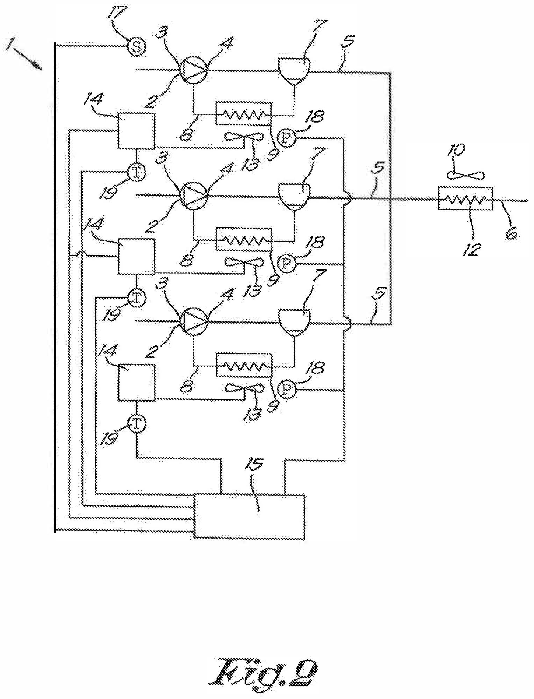

Fig. 2 shows by way of illustration a first variant of Fig. 1, three elements 2 for compressing gas being connected in parallel in this case.

In this case, air-cooled coolers 9 are provided in the return lines 8, each having their own adjustable-speed fan 13.

Each of said fans 13 is driven by a variable-speed fan motor 14 and all are controlled by one controller 15.

This is not necessary because it is also possible for each fan 13 to have its own sub-controller.

It is also possible that some fans 13 are provided with one common controller 15 and that the other fans 13 are each provided with their own, separate sub-controller.

In this case, each of said adjustable-speed fans 13 also cools its associated fan motor 14.

Furthermore, each fan motor 14 is provided with a temperature sensor 19 that can measure a temperature of the fan motor 14, for example a temperature of a winding and/or bearing in the fan motor 14.

Said temperature sensors 19 are connected to the controller 15.

The controller 15 is also connected to pressure sensors 18 that measure a pressure of the cooling air flow generated by the fans 13.

An aftercooler in the form of an air-cooled cooler 12 is also provided in the outlet line 6 of the device 1, which aftercooler is provided with a fan 10 that has no adjustable speed.

In this case, a heat recovery system 11 is not provided, nor is a temperature sensor 16 provided downstream of the cooler 9.

In this case, the controller 15 controls the fans 13 of the air-cooled coolers 9 in the return lines 8 in such a way that, if one or more of said coolers 9 does not need to cool, the speed of the respective fans 13 is brought back to the minimum required speed in order to prevent a backflow of cooling air and cool the aforementioned fan motor 14.

One or more of said coolers 9 does not need to cool if the respectiveelement 2 is stopped or running without a load.

If heat recovery systems 11 are provided, one or more of the coolers 9 also do not need to cool in the event that it is no longer necessary to cool the returned liquid if the heat recovery systems 11 can sufficiently cool the liquid.

In these cases, the speed of the respective fans 13 can be brought back to the aforementioned minimum required speed.

The minimum required speed is now determined on the basis of the environmental parameters, a pressure of the air flow generated by the fan 13 and a temperature of a fan motor 14 of the adjustable fan 13.

On the basis of signals from the sensors 17, 18, 19, the controller 15 determines said minimum required speed.

If the fans 13 or the fans 10 and 13 have a common outlet for cooling air, the minimum required speed can also be determined on the basis of a pressure of the cooling air in said common outlet for cooling air.

If the controller 15 receives the signal that cooling the returned liquid is not necessary and/or that one of the elements 2 is stopped or running without a load, the controller 15 controls the relevant fan motor 14 in such a way that the speed of the fan 13 drops to the aforementioned determined minimum required speed, which ensures that the fan 13 still cools the fan motor 14 sufficiently to avoid overheating and that the fan 13 avoids a backflow of heated cooling air.

In all these cases, the fan motor 14 consumes less energy.

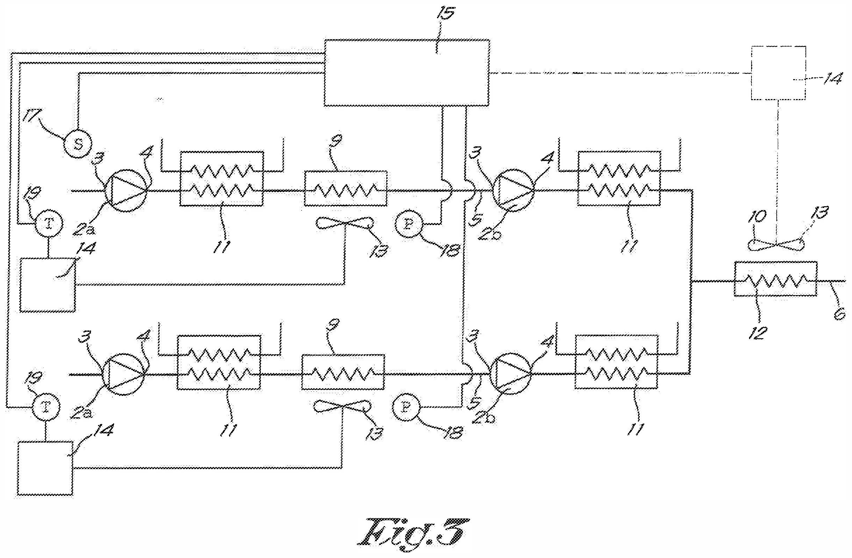

Fig. 3 shows a second variant of Fig. 1.

In this case, it is an oil-free two-stage device having two two-stage installations installed in parallel.

Each two-stage installation comprises a low-pressure element 2a for compressing the gas and a high-pressure element 2b for further compressing the gas compressed by the low-pressure element 2a, which low pressure element and high-pressure element are installed in series.

The device 1 is provided with intercoolers 9 between the low-pressure element 2a and the high-pressure element 2b.

Said intercoolers 9 are provided with adjustable-speed fans 13.

Each of said fans 13 is driven by a variable-speed fan motor 14 and all are controlled by one controller 15.

In this case, each of said adjustable-speed fans 13 also cools its associated fan motor 14.

Furthermore, each fan motor 14 is provided with a temperature sensor 19 that can measure a temperature of the fan motor 14, for example a temperature of a winding and/or bearing in the fan motor 14.

Said temperature sensors 19 are connected to the controller 15.

The controller 15 is also connected to pressure sensors 18 that measure a pressure of the cooling air flow generated by the fans 13.

Downstream of the high-pressure elements 2b, a heat recovery system 11 is accommodated in each outlet line 5.

In addition, a heat recovery system 11 is accommodated in each outlet line 5 of the two-stage installations upstream of the high-pressure elements 2b and the intercoolers 9, in addition to the intercoolers 9.

It is also possible that only the heat recovery systems 11 are present upstream of the high-pressure elements 2b.

An aftercooler in the form of an air-cooled cooler 12 is also provided in the outlet line 6 of the device 1, which aftercooler is provided with a fan 10 that has no adjustable speed.

The operation is otherwise analogous to the embodiments described above.

In this case, the respective fans 13 can be adjusted to the minimum required speed if the heat recovery between the low-pressure element 2a and the high-pressure element 2b is active and/or one of the two two-stage installations installed in parallel is switched off or stationary.

Although, in the examples described above, each air-cooled cooler 9, 12 is cooled by one fan 10, 13, it cannot be ruled out that an air-cooled cooler 9, 12 is cooled by more than one fan 10, 13 and/or that one fan 10, 13 cools a plurality of air-cooled coolers 9, 12.

Although, in all of the examples described above, the air-cooled cooler 12 in the outlet line 6 of the device 1 is provided with a fixed-speed fan 10, it cannot be ruled out that said air-cooled cooler 12 is provided with an adjustable-speed fan 13.

Fig. 3 shows this with a dotted line.

The adjustable-speed fan 13 is provided with a fan motor 14 that is driven by the controller 15 to which said fan motor is connected.

The speed of said fan 13 of the air-cooled cooler 12 can be controlled to the aforementioned minimum required speed if the compressed gas supplied by the device does not need to be cooled because the consumers do not need cooled compressed gas.

It cannot be ruled out that, in this case, the heat recovery systems 11 are not present in the outlet lines 5 downstream of the high-pressure elements 2b.

The present invention is by no means limited to the embodiments described as examples and shown in the figures, but an air-cooled device according to the invention and a method according to the invention for controlling an air-cooled device can be realized according to various alternatives without going beyond the scope of the invention.

## Claims

1. A method for controlling an air-cooled device (1) for compressing a gas, which device comprises at least one element (2) for compressing the gas, at least one air-cooled cooler (9, 12) for cooling a fluid in the device (1) and two or more fans (10, 13), at least one of the fans (10, 13) being an adjustable-speed fan (13) for generating a flow of cooling air for cooling the air-cooled cooler (9, 12), **characterized in that**, when the air-cooled cooler (9, 12) does not need to cool, the method consists of controlling the speed of the adjustable-speed fan (13) to a minimum required speed in order to avoid at least a backflow of cooling air traveling in a direction opposite to the flow.

2. The method according to claim 1, **characterized in that** the speed of the adjustable-speed fan (13) is reduced to the minimum required speed if:
- it is not necessary to cool the compressed gas in case the air-cooled cooler (9, 12) is used to cool the gas compressed by the device (1); and/or
- instead of the air-cooled cooler (9, 12) a heat recovery system (11) provides a necessary cooling of the device (1); and/or
- the element (2) is stopped or running without a load.

3. The method according to claim 1 or 2, **characterized in that** the minimum required speed is determined on the basis of:
- environmental parameters; and/or
- a pressure of the flow of cooling air generated by the fan (13); and/or
- a pressure of a flow of cooling air generated by the fans (10, 13) in a common outlet of the device (1) for cooling air.

4. The method according to one of the preceding claims, **characterized in that** the adjustable-speed fan (13) is driven by a fan motor (14) that is cooled by said fan (13) and **in that** the method consists of controlling the speed of the adjustable-speed fan (13) to the minimum required speed if the air-cooled cooler (9, 12) does not need to cool in order to avoid the backflow of cooling air and in order to cool the aforementioned fan motor (14) just enough to prevent the fan motor (14) from overheating.

5. The method according to claim 4, **characterized in that** the minimum required speed is determined on the basis of a temperature of the fan motor (14) of the adjustable-speed fan (13).

6. The method according to claim 5, **characterized in that** the temperature of the fan motor (14) is a temperature that is representative of one or more bearings of the fan motor (14).

7. The method according to claim 5, **characterized in that** the temperature of the fan motor (14) is a temperature that is representative of one or more windings of the fan motor (14).

8. The method according to one of the preceding claims, **characterized in that** the minimum required speed is a predetermined fixed value that is determined on the basis of a worst-case scenario of an operating mode of other fans (10) and/or coolers (9, 12) of the device (1).

9. An air-cooled device for compressing gas, which device comprises at least one element (2) for compressing the gas, at least one air-cooled cooler (9, 12) for cooling a fluid in the device (1) and two or more fans (10, 13), at least one of the fans (10, 13) being an adjustable-speed fan (13) for generating a flow of cooling air for cooling the air-cooled cooler (9, 12), **characterized in that** the adjustable-speed fan (13) is provided with a controller (15) that is configured to carry out a method according to one of the preceding claims.

10. The air-cooled device according to claim 9, **characterized in that** the device (1) is provided with a plurality of air-cooled coolers (9, 12) for cooling one or more fluids in the device (1) and provided with a plurality of adjustable-speed fans (13), the adjustable-speed fans (13) being provided with the controller (15) that is configured to carry out the method according to one of preceding claims 1 to 5.

11. The air-cooled device according to claim 10, **characterized in that** at least one of the adjustable-speed fans (13) is provided with a separate sub-controller.

12. The air-cooled device according to claim 10, **characterized in that** one controller (15) is provided for all adjustable-speed fans (13).
